# EUROPÄISCHE PATENTANMELDUNG

(11) **EP 1 642 785 A1**
(43) Veröffentlichungstag der Anmeldung: **05.04.2006**
(21) Anmeldenummer: 05020902.2
(22) Anmeldetag: 23.09.2005
(51) Int. Cl.: B60R 21/239, B60R 21/276, B60R 21/20

(54) **Gassackmodul**

(30) Priorität: 29.09.2004 DE 202004015166 U
(71) Anmelder: TRW Automotive Safety Systems GmbH, 63743 Aschaffenburg (DE)
(72) Erfinder: Keutz, Markus, 64380 Rossdorf (DE)
(74) Vertreter: Kitzhofer, Thomas

(57) **Zusammenfassung**

Ein Gassackmodul für eine Fahrzeuginsassen-Rückhaltevorrichtung umfaßt einen Gasgenerator (12) zum Befüllen eines Gassacks (14), eine in einem festen Bauteil des Gassackmoduls (10) gebildete Abströmöffnung (18), durch die das vom Gasgenerator (12) erzeugte und in den Gassack (14) geleitete Gas abströmen kann, und ein aktives Ventil mit einem Ventilkörper (20), der in einer Schließstellung die Abströmöffnung (18) schließt und in einer Öffnungsstellung die Abströmöffnung (18) freigibt. Der Ventilkörper (20) bewegt sich beim Öffnen in Richtung Innenraum (26) des Gassackmoduls (10), und es ist eine Schutzvorrichtung vorgesehen, die beim Öffnen einen Kontakt zwischen dem Ventilkörper (20) und dem Gassack (14) verhindert.

## Beschreibung

Die Erfindung betrifft ein Gassackmodul für eine Fahrzeuginsassen-Rückhaltevorrichtung mit einem Gasgenerator zum Befüllen eines Gassacks, einer in einem festen Bauteil des Gassackmoduls gebildeten Abströmöffnung, durch die das vom Gasgenerator erzeugte und in den Gassack geleitete Gas abströmen kann, und einem aktiven Ventil mit einem Ventilkörper, der in einer Schließstellung die Abströmöffnung schließt und in einer Öffnungsstellung die Abströmöffnung freigibt, wobei sich der Ventilkörper beim Öffnen in Richtung Innenraum des Gassackmoduls bewegt.

Für gewöhnlich soll bei einem Gassackmodul der Gassack mit dem vom Gasgenerator erzeugten Gas möglichst schnell befüllt werden. In bestimmten Fällen ist es allerdings wünschenswert, den Gassack nicht mit dem gesamten verfügbaren Gasvolumen zu befüllen, oder, allgemeiner, Gas ausströmen zu lassen, weshalb im Gassackmodul Abströmöffnungen vorgesehen sind, durch deren Freigabe der Druck im Gassack begrenzt werden kann.

Zum Freigeben der Abströmöffnungen sind sogenannte aktive Ventile bekannt, also Ventile, die sich beispielsweise auf ein bestimmtes Signal hin (aktiv) öffnen und nicht lediglich durch den Druck oder die Temperatur des vom Gasgenerator erzeugten Gases geöffnet werden.

Es sind Gassackmodule angedacht, bei denen eine Klappe, die in ein festes Bauteil des Moduls ("fest" im Sinne von starr), z.B. den Gasgeneratorträger, integriert ist, eine Abströmöffnung verschließt und bei Bedarf freigibt. Dazu wird die Klappe aus einer Schließstellung in eine Öffnungsstellung verschwenkt und bewegt sich dabei in Richtung des Gassackmodul-Innenraums. Eine solche Ausgestaltung bietet zum einen den Vorteil der stabilen Unterbringung der Abströmöffnung in einem starren Bauteil des Gassackmoduls, und zum anderen ist sie flexibler einsetzbar als ein Ventil mit einer nach außen öffnenden Klappe, da beispielsweise im Falle eines Fahrer-Gassackmoduls nur ein begrenzter Bauraum in der Lenkradnabe zur Verfügung steht.

Der Erfindung liegt die Aufgabe zugrunde, ein wenig Platz erforderndes Gassackmodul mit einem eine Abströmöffnung verschließenden Ventilkörper bereitzustellen, bei dem sich der Gassack möglichst unbeeinflußt vom Ventil entfaltet.

Erfindungsgemäß ist dazu bei einem Gassackmodul der eingangs genannten Art eine Schutzvorrichtung vorgesehen, die beim Öffnen einen Kontakt zwischen dem Ventilkörper und dem Gassack verhindert. Gemäß der Erfindung kann das Ventil zu einem sehr frühen Zeitpunkt der Gassackentfaltung öffnen, um durch ein Ableiten des Gases aus dem Gassackinneren die Insassenbelastung niedrig zu halten, ohne daß Beschädigungen des Gassackgewebes möglich sind, oder das Öffnungsverhalten der Klappe beeinflußt wird. Auf diese Weise lassen sich mechanische Gassackbeschädigungen ausschließen. Außerdem wird gewährleistet, daß es nicht zu einem ungewollten Schließen des Ventilkörpers durch Interaktion mit dem sich entfaltenden Gassack kommt.

Vorzugsweise ist die Schutzvorrichtung zumindest teilweise im Inneren des Gassacks angeordnet. Dadurch kann besonders zuverlässig ein möglicher Kontakt zwischen dem sich öffnenden Ventilkörper und dem Gassack verhindert werden.

Vorteilhaft schützt die Schutzvorrichtung den Gassack vor thermischer Überlastung. Dies ist vor allem von Bedeutung, wenn zur Freigabe der Abströmöffnung ein pyrotechnischer Antrieb eingesetzt werden soll. Durch die Schutzvorrichtung wird eine unmittelbare Anströmung des Gewebes weitgehend vermieden.

Gemäß einer bevorzugten Ausführungsform umgibt die Schutzvorrichtung den Ventilkörper wenigstens teilweise. So wird wirkungsvoll verhindert, daß der Ventilkörper durch den Gassackdruck in Schließrichtung gedrückt wird und sich teilweise oder vollständig schließt, was insbesondere in einer Phase der Interaktion mit dem Fahrzeuginsassen von Bedeutung ist. Zusätzlich bietet eine derartige Anordnung Schutz vor möglichen separierenden Teilen des Ventils.

Die Schutzvorrichtung kann den Gasgenerator wenigstens teilweise umgeben. Dadurch eröffnet sich die Möglichkeit, einen Teil des vom Gasgenerator erzeugten Gases kontrolliert zur Abströmöffnung zu lenken.

Vorteilhaft weist die Schutzvorrichtung einen Käfig auf, der mit dem festen Bauteil des Gassackmoduls verbunden ist. Auf diese Weise ergibt sich eine besonders stabile Anordnung, bei der die Schutzvorrichtung in vorteilhafter Weise zur Stabilität des gesamten Moduls beiträgt.

Vorzugsweise ist ein Abschnitt des Gassacks zwischen dem Käfig und dem festen Bauteil des Gassackmoduls angeordnet. Die Schutzvorrichtung dient damit zusätzlich zur Befestigung des Gassacks im Modul, wodurch sich ein einfacher Aufbau mit einem Minimum an Bauteilen ergibt.

Gemäß einer bevorzugten Ausführungsform weist die Schutzvorrichtung mehrere Ausnehmungen auf, die die Strömung des vom Gasgenerator erzeugten und in den Gassack eingeleiteten Gases beeinflussen. So läßt sich durch Form, Anzahl und geometrische Anordnung der Ausnehmungen eine gleichmäßige Befüllung des Gassacks erreichen, wobei wiederum auf ein zusätzliches Bauteil verzichtet werden kann.

Der Ventilkörper kann eine Klappe umfassen, die die Abströmöffnung in der Schließstellung bedeckt und in der Öffnungsstellung freigibt. Eine solche Klappe stellt einen besonders einfachen und dennoch zuverlässigen Freigabemechanismus dar, der die Abströmöffnung in der Schließstellung sicher verschließt.

Gemäß einer bevorzugten Ausführungsform weist der Ventilkörper eine pyrotechnische Einheit auf, die ein rasches und zuverlässiges Freigeben der Abströmöffnung gewährleistet.

Die pyrotechnische Einheit kann einen Sprengbolzen haben, der zugleich in der Schließstellung einen zuverlässigen Befestigungsmechanismus wie auch beim Öffnen eine schnelle Freigabevorrichtung für den Ventilkörper darstellt.

Vorteilhaft sind der Ventilkörper und die Schutzvorrichtung so zueinander angeordnet, daß der Ventilkörper beim Öffnen der Abströmöffnung an der Schutzvorrichtung anschlägt. Auf diese Weise nimmt die Schutzvorrichtung die Energie des sich öffnenden Ventilkörpers auf und verhindert einen Kontakt desselben mit dem Gassack.

Weitere Merkmale und Vorteile der Erfindung ergeben sich aus der nachfolgenden Beschreibung einer bevorzugten Ausführungsform der Erfindung anhand der beigefügten Zeichnung. In dieser zeigt:

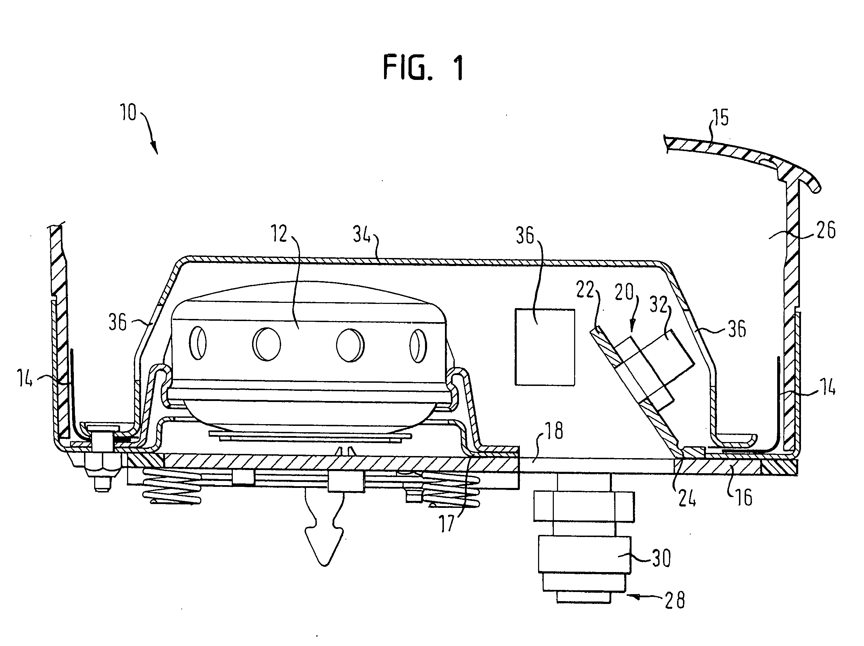

- Figur 1 eine Seitenansicht eines erfindungsgemäßen Gassackmoduls, teilweise im Schnitt.

Die Figur zeigt ausschnittsweise ein Gassackmodul 10, das insbesondere für einen Einsatz als Fahrer-Gassackmodul vorgesehen, jedoch nicht darauf beschränkt ist. Das Gassackmodul 10 weist einen Gasgenerator 12 und einen in der Figur nur angedeuteten Gassack 14 auf und wird im nicht ausgelösten Zustand durch eine zum Fahrzeuginsassen gerichtete Abdeckkappe 15 begrenzt. Ferner sind eine Halteplatte 16 und ein Generatorträger 17 mit einer darin gebildeten Abströmöffnung 18 vorgesehen, die mittels eines Ventilkörpers 20 verschlossen oder, wie in der Figur gezeigt, freigegeben werden kann. Die Abströmöffnung 18 und der Ventilkörper 20 bilden also ein Ventil zur Begrenzung des Gassack-Innendrucks.

Der Ventilkörper 20 weist eine Klappe 22 auf, die in der Schließstellung die Abströmöffnung 18 abdeckt und im Falle der Betätigung des Ventils um ein Biegescharnier 24 nach oben, in den Innenraum 26 des Gassackmoduls 10, schwenkt, wie in der Figur gezeigt ist. Zur Betätigung des Ventils ist als Antriebsmittel eine pyrotechnische Einheit in Form eines Sprengbolzens 28 vorgesehen, der aus einem Unterteil 30 und einem Oberteil 32 besteht. Der Sprengbolzen 28 ist zur Verdeutlichung in der Figur überdimensional groß dargestellt.

Der Ventilkörper 20 ist so mit der Halteplatte 16 bzw. dem Generatorträger 17 verbunden, daß ein Schwenken der Klappe 22 um das Biegescharnier 24 im Falle einer Aktivierung des Ventils möglich ist. Dabei kann die Klappe 22 einstückig mit dem Generatorträger 17 oder als gesondertes Bauteil ausgeführt sein.

Das Gassackmodul 10 weist ferner eine im Inneren des Gassacks 14 um den Gasgenerator 12 und die Abströmöffnung 18 samt Ventilkörper 20 angeordnete Schutzvorrichtung in Form eines Käfigs 34 auf. Der Käfig 34 ist im wesentlichen topfförmig und, beispielsweise über eine Schraubverbindung, fest mit der Halteplatte 16 bzw. dem Generatorträger 17 verbunden. Dabei ist ein auch als Einblasmund bezeichneter Abschnitt des Gassacks 14 zwischen dem Käfig 34 und dem Generatorträger 17 zum Zwecke der Befestigung eingeklemmt. Darüber hinaus weist der Käfig 34 mehrere Ausnehmungen 36 auf, die entlang seiner Seitenwand angeordnet sind.

Tritt nun eine Situation ein, in der es erforderlich ist, den Innendruck des sich entfaltenden oder des bereits entfalteten Gassacks 14 zu reduzieren, wird durch Betätigung des Sprengbolzens 28 der Ventilkörper 20 aus der Schließstellung, in der die Klappe 22 auf der Halteplatte 16 waagrecht aufliegt, in die in Figur 1 gezeigte Öffnungsstellung mit freigegebener Abströmöffnung 18 gebracht. Dabei wird die Klappe 22 um das Biegescharnier 24 nach oben, in Richtung des Innenraums 26 des Gassackmoduls 10, gedrückt, wobei je nach Form und geometrischer Anordnung der Ausnehmungen 36 entweder das Oberteil 32 des Sprengbolzens 28 oder die Klappe 22 am Käfig 34 anschlägt. Dadurch wird ein Kontakt des Ventilkörpers 20 und des Antriebsmittels mit dem Gassack 14 verhindert.

So wird zum einen die Möglichkeit einer mechanischen Beschädigung des Gassackgewebes durch die sich öffnende Klappe 22 bzw. das Oberteil 32 des Sprengbolzens 28 ausgeschlossen, zum anderen wird vermieden, daß die Klappe 22 aufgrund einer Interaktion mit dem noch nicht vollständig entfalteten Gassack 14 ungewollt geschlossen wird. Auch in einer späteren Phase der Gassackfunktion, beispielsweise erst durch Interaktion mit einem Fahrzeuginsassen, könnte es zum teilweisen oder vollständigen Schließen des Ventils kommen, wenn durch den Gassackdruck die Klappe 22 des Ventils nach unten, d.h. in Schließrichtung, gedrückt wird. Auch dies wird durch den Käfig 34 verhindert.

## Patentansprüche

1. Gassackmodul für eine Fahrzeuginsassen-Rückhaltevorrichtung mit
einem Gasgenerator (12) zum Befüllen eines Gassacks (14),
einer in einem festen Bauteil des Gassackmoduls (10) gebildeten Abströmöffnung (18), durch die das vom Gasgenerator (12) erzeugte und in den Gassack (14) geleitete Gas abströmen kann,
und einem aktiven Ventil mit einem Ventilkörper (20), der in einer Schließstellung die Abströmöffnung (18) schließt und in einer Öffnungsstellung die Abströmöffnung (18) freigibt,
**dadurch gekennzeichnet, daß**
sich der Ventilkörper (20) beim Öffnen in Richtung Innenraum (26) des Gassackmoduls (10) bewegt, und
eine Schutzvorrichtung vorgesehen ist, die beim Öffnen einen Kontakt zwischen dem Ventilkörper (20) und dem Gassack (14) verhindert.

2. Gassackmodul nach Anspruch 1, **dadurch gekennzeichnet, daß** die Schutzvorrichtung zumindest teilweise im Inneren des Gassacks (14) angeordnet ist.

3. Gassackmodul nach Anspruch 1 oder Anspruch 2, **dadurch gekennzeichnet, daß** die Schutzvorrichtung den Gassack (14) vor thermischer Überlastung schützt.

4. Gassackmodul nach einem der vorhergehenden Ansprüche, **dadurch gekennzeichnet, daß** die Schutzvorrichtung den Ventilkörper (20) wenigstens teilweise umgibt.

5. Gassackmodul nach einem der vorhergehenden Ansprüche, **dadurch gekennzeichnet, daß** die Schutzvorrichtung den Gasgenerator (12) wenigstens teilweise umgibt.

6. Gassackmodul nach einem der vorhergehenden Ansprüche, **dadurch gekennzeichnet, daß** die Schutzvorrichtung einen Käfig (34) aufweist, der mit dem festen Bauteil des Gassackmoduls (10) verbunden ist.

7. Gassackmodul nach Anspruch 6, **dadurch gekennzeichnet, daß** ein Abschnitt des Gassacks (14) zwischen dem Käfig (34) und dem festen Bauteil des Gassackmoduls (10) angeordnet ist.

8. Gassackmodul nach einem der vorhergehenden Ansprüche, **dadurch gekennzeichnet, daß** die Schutzvorrichtung mehrere Ausnehmungen (36) aufweist, die die Strömung des vom Gasgenerator (12) erzeugten und in den Gassack (14) eingeleiteten Gases beeinflussen.

9. Gassackmodul nach einem der vorhergehenden Ansprüche, **dadurch gekennzeichnet, daß** der Ventilkörper (20) eine Klappe (22) umfaßt, die die Abströmöffnung (18) in der Schließstellung bedeckt und in der Öffnungsstellung freigibt.

10. Gassackmodul nach einem der vorhergehenden Ansprüche, **dadurch gekennzeichnet, daß** am Ventilkörper (20) wenigstens ein Abschnitt eines Antriebsmittels zum Betätigen des Ventils sitzt und die Schutzvorrichtung einen direkten Kontakt des Antriebsmittels mit dem Gassack (14) beim Öffnen verhindert.

11. Gassackmodul nach einem der vorhergehenden Ansprüche, **dadurch gekennzeichnet, daß** der Ventilkörper (20) eine pyrotechnische Einheit aufweist.

12. Gassackmodul nach Anspruch 11, **dadurch gekennzeichnet, daß** die pyrotechnische Einheit einen Sprengbolzen (28) aufweist.

13. Gassackmodul nach einem der vorhergehenden Ansprüche, **dadurch gekennzeichnet, daß** der Ventilkörper (20) und die Schutzvorrichtung so zueinander angeordnet sind, daß der Ventilkörper (20) beim Öffnen der Abströmöffnung (18) an der Schutzvorrichtung anschlägt.
